Europäisches Patentamt

European Patent Office

Office européen des brevets

(11) Publication number: **0 236 008**
A1

## EUROPEAN PATENT APPLICATION

(21) Application number: 87301381.7

(22) Date of filing: 18.02.87

(51) Int. Cl.⁴: **G 01 J 1/42**, B 23 K 26/04

(30) Priority: 22.02.86 GB 8604449

(43) Date of publication of application: 09.09.87
Bulletin 87/37

(84) Designated Contracting States: BE CH DE ES FR GB IT LI
NL SE

(71) Applicant: AUSTIN ROVER GROUP LIMITED,
Fletchamstead Highway, Canley Coventry CV4 9DB (GB)

(72) Inventor: Vein, Martin, 6 Kandahar, Aldbourne Nr
Marlborough Wiltshire (GB)

(74) Representative: Waters, Jeffrey et al, ARG Patent
Department Cowley Body Plant, Cowley Oxford OX4 5NL
(GB)

(54) **Monitoring a laser beam.**

(57) Monitoring a laser beam (1) by means of a partially reflective mirror (3) which divides the beam (1) into a low intensity transmitted beam (5) and a high intensity reflected beam (4) having similar intensity distributions over their cross-sections and sensing the intensity distribution over a cross-section of the low intensity beam (5) by means of a thermal imaging camera (6) to produce a display representative of the intensity distribution of the intensity beam (4) on an oscilloscope 7. The intensity distribution of the laser beam (1) and/or the position of the beam (1) can thus be monitored.

0236008

This invention relates to apparatus for monitoring a laser beam and to a method of monitoring a laser beam.

Laser beams are used for a wide variety of purposes, such as cutting, heat treating and welding, and these uses each require a close control to be kept on the energy distribution over a cross-section of the beam and on the position of the beam. A known method of monitoring the energy distribution over a cross-section of the beam involves passing a wire through the beam and measuring the intensity of the light reflected by the wire. Such a method requires complex expensive equipment, does not enable the beam to be continuously monitored, is subject to error since the beam is disturbed as it is monitored and is unlikely to give consistent results on repeated tests.

According to a first aspect of this invention there is provided apparatus for monitoring a laser beam comprising a partially reflective mirror for dividing a laser beam into a low intensity beam and a high intensity beam with similar intensity distributions over their cross-sections and a means for sensing the intensity distribution over a cross-section of the low intensity beam to thereby determine the intensity distribution of the high intensity beam.

According to a second aspect of this invention there is provided a method of monitoring a laser beam comprising the steps of dividing a laser beam into a low intensity beam and a high intensity beam with similar intensity distributions over their cross-sections and sensing the intensity distribution over a cross-section of the low intensity beam to thereby determine the intensity distribution of the high intensity beam.

Preferred features of the invention will be apparent from the following description of an embodiment of the invention and from the subsidiary claims of the specification.

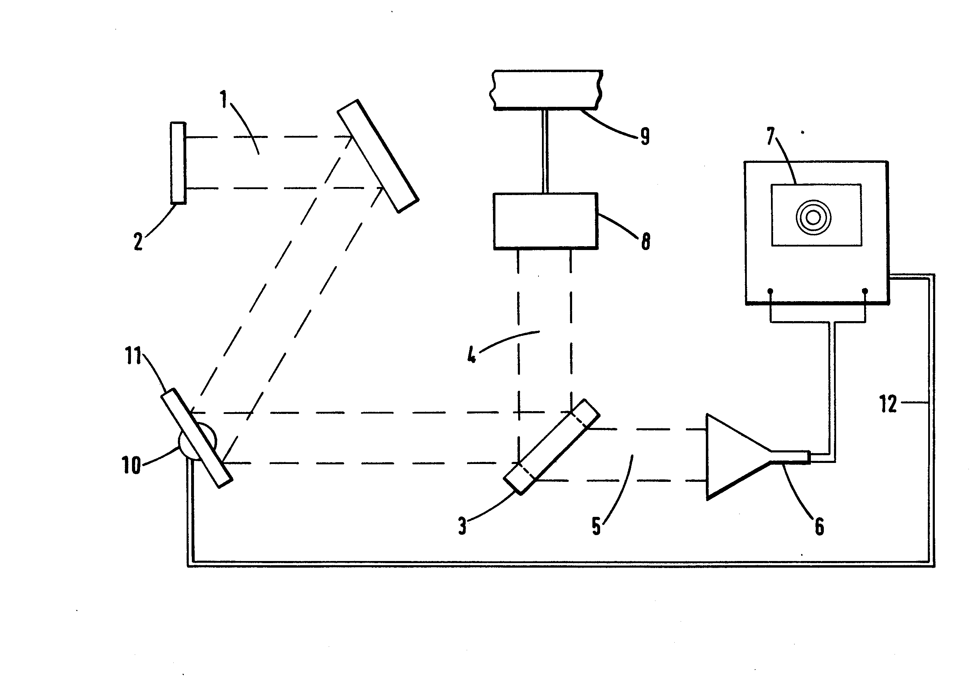

The invention will now be described, by way of example, with reference to the accompanying drawing which is a diagram showing a preferred embodiment of the invention.

The drawing shows a 1 KW laser beam 1 (indicated by dashed lines) emitted from the output window 2 of a laser and which is incident upon a partially reflective mirror 3. The mirror 3, which may typically be formed of germanium, gallium arsenide or from zinc selenide, is designed so as to reflect 99.5% of the light incident thereon as a high intensity beam 4 which is passed through a further mirror and lens system 8 to a workpiece 9 where it is used, for example, for cutting, heat treating or welding.

The mirror 3 also transmits 0.5% of the light incident thereon as a low intensity beam 5 which in this case would be a 5 Watt beam. As the level of reflectivity across the mirror 3 is uniform, the high and low intensity beams 4 and 5 have similar intensity distributions over their cross-sections. The 5W beam is, however, of sufficiently low intensity to be sensed by means of a camera such as a video camera 6 sensitive to the appropriate wavelengths and which is arranged to produce a display on an oscilloscope screen 7 representative of the sensed intensity distribution. It will be appreciated that the level of reflectivity of the mirror 3 is chosen in dependence upon the strength of the beam and the sensitivity of the camera.

A laser beam used for cutting may comprise a high intensity core surrounded by two lower intensity layers. It is desirable to ensure that the beam has this form and that the high intensity core is maintained in the centre of the beam so that the beam is symmetrical about its axis. It will be appreciated that the apparatus described above provides a very convenient way of monitoring the energy distribution over the cross-section of the beam since the energy distribution of the low intensity beam 5

0236008

is the same as that of the high intensity beam 4. A feedback may be provided from the oscilloscope 7 to the appropriate controls of the laser to ensure that the energy distribution is corrected should it not be correct initially or if it changed during use.

A variety of different types of camera can be used but the two main types are those which have a two-dimensional array of photo-sensitive devices to sense the intensity distribution of the image formed therein or a photo-sensitive screen which receives the image and is scanned to measure the intensity of light received by the different parts thereof. A particular advantage of the system described above is that the camera used may be standard equipment (modified to some extent when appropriate) so the necessity of using specially designed, and thus highly expensive, equipment is avoided. The camera must, of course, be sensitive to the particular range of wave lengths of the laser beam and in the applications mentioned would be a camera sensitive to infra-red wave lengths. A thermal imaging camera may thus be suitable. Similarly, the display of the intensity distribution may be produced on an oscilloscope or other equipment employing a cathode ray tube so there is again no need to use specially designed equipment. The display may, of course, be a simple pictorial representation of a cross-section of beam, a graphical representation of the intensity across the beam or any other suitable representation.

The equipment described above may also be used to monitor the position of the laser beam. If the beam moves then the display on the oscilloscope 7 will also move to a new position. This may be detected by monitoring the position of the outer boundary of the beam or by monitoring the position of the highest intensity portion of the beam.

Again, a feedback 12 may be provided from the monitoring equipment to an adjustment device such as a servo-motor 10 for adjusting the orientation of a movable mirror 11 positioned between the laser and the partially reflective mirror 3 to maintain the beam in a desired position.

The partially reflective mirror 3 may be the first mirror on which the beam emitted by the laser falls or it could be positioned elsewhere in the mirror system(as shown). It might, for instance, be more appropriate for the partially reflective mirror to be part of a mirror system added to a system already in use.

It would also, of course, be possible to use a partially reflecting mirror which transmits 99.5% of the light incident thereon to produce the high intensity beam and reflects 0.5% of the light to produce the low intensity beam rather than vice-versa so long as the mirror is capable of withstanding the high energy throughput of the high intensity beam.

0236008

The mirror described above which reflects the majority of the light incident thereon and transmits only a small proportion of the light is, however, preferred as it can be formed from one of the less expensive materials such as germanium which, since it can only be used with energy throughputs up to 100w, would be unsuitable for transmitting the high intensity beam.

CLAIMS

1.    Apparatus for monitoring a laser beam comprising a partially reflective mirror(3) for dividing a laser beam(1) into a low intensity beam(5)and a high intensity beam(4) with similar intensity distributions over their cross-sections and a means(6) for sensing the intensity distribution over a cross-section of the low intensity beam(5)to thereby determine the intensity distribution of the high intensity beam.

2.    Apparatus as claimed in claim 1 in which the partially reflective mirror(3) is such as to transmit less than 1% of an incoming beam to produce the low intensity beam(5)and reflect the remainder of the incoming beam to produce the high intensity beam(4).

3.    Apparatus as claimed in claim 1 or 2 in which the intensity sensing means(6) is capable of producing a display representative of the sensed intensity distribution on a cathode ray tube screen when connected thereto.

4.    Apparatus as claimed in claim 3 in which the intensity sensing means is a camera(6) which comprises a two-dimensional array of photo-sensitive devices.

5. Apparatus as claimed in claim 3 in which the intensity sensing means is a camera(6) which comprises a photo-sensitive screen that is scanned to sense the intensity distribution.

6. Apparatus as claimed in claim 4 or in claim 5 in which the camera is a thermal imaging camera(6).

7. Apparatus as claimed in any preceding claim having first feed back means connected to a laser for maintaining a desired intensity distribution over a cross-section of the beam(1) produced thereby.

8. Apparatus as claimed in any preceding claim having second feed back means(12) connected to adjustment means(10) controlling the orientation of a further mirror(11) maintaining the beam(1) in a desired position.

9. Apparatus as claimed in any preceding claim arranged in conjunction with a laser which is to be used to cut or heat treat or weld a workpiece.

10. A method of monitoring a laser beam comprising the steps of dividing a laser beam(1) into a low intensity beam(5)and a high intensity beam(4) with similar intensity distributions over their cross-sections and sensing the intensity distribution ——————————————————

0236008

over a cross-section of the low intensity beam(5)to thereby determine the intensity distribution of the high intensity

beam(4).

0236008

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 268 407 (FERRANTI LTD) * Page 2, lines 47-76 * | 1,2,10 | G 01 J 1/42 B 23 K 26/04 |
| A | OPTICAL ENGINEERING, vol. 25, no. 1, January 1986, pages 132-141, Bellingham, Washington, US; J.D. FRANK: "Laser beam profile measurements" * Page 135 * | 4 | |
| A | PATENT ABSTRACTS OF JAPAN, vol. 9, no. 11 (M-351)[1734], 18th January 1985; & JP-A-59 159 291 (MITSUBISHI JUKOGYO K.K.) 08-09-1984 * Abstract * | 5,6 | |
| A | US-A-4 504 727 (L. MELCHER) * Figure; column 4, lines 22-34; claim 9 * | 1,7,9 | TECHNICAL FIELDS SEARCHED (Int. Cl.4) G 01 J H 01 S B 23 K |

The present search report has been drawn up for all claims

| Place of search | Date of completion of the search | Examiner |
|---|---|---|
| THE HAGUE | 19-05-1987 | VAN DEN BULCKE E. |